Europäisches Patentamt

European Patent Office

Office européen des brevets

(11) Publication number: **0 061 675**
**B1**

(12) **EUROPEAN PATENT SPECIFICATION**

(45) Date of publication of patent specification: **11.06.86**

(51) Int. Cl.⁴: **G 21 D 1/00, G 21 C 13/00**

(21) Application number: **82102301.7**

(22) Date of filing: **20.03.82**

(54) Nuclear power generating facility and method of installation.

(30) Priority: **31.03.81 US 249522**
**24.02.82 US 350268**

(43) Date of publication of application:
**06.10.82 Bulletin 82/40**

(45) Publication of the grant of the patent:
**11.06.86 Bulletin 86/24**

(84) Designated Contracting States:
**BE DE FR GB IT NL SE**

(56) References cited:
**WO-A-80/00893**
**FR-A-2 267 610**
**GB-A- 837 031**
**GB-A-1 429 685**
**US-A-3 752 738**

**NUCLEAR SAFETY, vol.15, no.6, November-
December 1974, Washington D.C. (US), G.
YADIAGAROGLU et al.: "Novel siting solutions
for nuclear power plants", pages 651-664**

(73) Proprietor: **WESTINGHOUSE ELECTRIC
CORPORATION**
**Westinghouse Building Gateway Center
Pittsburgh Pennsylvania 15222 (US)**

(72) Inventor: **Tower, Stephen Nelson**
**4448 Old Wm. Penn Hwy.**
**Murrysville Pennsylvania (US)**
Inventor: **Christenson, James A.**
**R.D. 3 Box 192**
**Elizabeth Pennsylvania (US)**
Inventor: **Braun, Howard**
**1277 Bellerock Street**
**Pittsburgh Pennsylvania (US)**

(74) Representative: **Holzer, Rupprecht, Dipl.-Ing.**
**Philippine-Welser-Strasse 14**
**D-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The present invention relates to a prefabricated nuclear power generating system and a method of installation.

Advantages would appear to result in the provision of a nuclear power generating system that can be of standardized construction, prefabricated, inspected and tested substantially at the factory site, and transported to different intracontinental and intercontinental use sites.

It is already known from GB—A—1 429 685 that a nuclear reactor may be contained within a floatable hull so that the nuclear reactor is able to be water-born, and to provide a channel leading into the reactor building and open to a waterway so that, when said channel is filled with water, the nuclear reactor may be floated into its operating position within the reactor building. Means are provided for isolating the channel from the waterway and for emptying the water from the channel to make the floatable hull of the nuclear reactor to rest on a foundation within the reactor building. The necessary pipe work for the heat exchange fluid used to extract thermal energy from the reactor when in use may also be provided within the hull and connections may be made directly with respective pipe work of the building.

It is the principal object of the present invention to provide a nuclear power generating facility and a method of installation permitting an essentially completed facility to be manufactured at a manufacturing site and installed at a use site.

With this object in view, a nuclear power generating facility is provided consisting of at least a nuclear steam supply system and an electric turbine-generator system, wherein said steam supply system is mounted on a floatable body which is made to rest at a use site on a foundation and said steam supply and turbine generator systems are interconnected at such use site by a passage for interaction between the systems at the use site, characterized in that both said nuclear steam supply and electric turbine generator systems are mounted on floatable elongated body units which are made to float at rest at the use site on foundations in parallel separate caves, located below normal water level, and that barriers are provided adapted to seal off said caves so as to block the body in place and that a shock absorbing support is provided at least for said nuclear steam supply system to reduce seismic loads on said steam supply system.

Nuclear fueled power generating units including nuclear steam supply system units, NSSSU, are hereby provided that are constructed to include barges or flotation bases as integrated portions thereof. The systems may be tested for operability and safety at the factory and then towed along navigable coastal or inland waterways, or overseas to foreign locations to a prepared foundation site at the point of use. The units are preferably so constructed and arranged as to permit removal of top and side sections to permit passage under low bridges and through narrow locks without requiring disassembly of safety class piping and wiring.

The basic concept of the present invention resides in the provision of a nuclear steam supply system unit, NSSSU, mounted on integrally formed flotation base so constructed and arranged as to enable such unit to be tested for safety and performance at the factory where it is constructed and thereafter towed while being floated to a pre-constructed foundation at a selected use site overseas or along the coast of the United States, or along a major navigable river or lake accessible from the coastline, such as along the Mississippi, Missouri, Ohio, etc rivers, or along the coast of the Great Lakes in the United States and North America as accessible by way of the St. Lawrence River. It is intended that the NSSSU be complete with respect to including all of the operational and safety equipment necessary to function as a source of steam supply. In this regard, the NSSSU includes a fore and aft mid-portion that functions as a nuclear steam supply section, NSSS, in affiliation with a control and instrument section C&IS at one end of the NSSSU and a mechanical auxiliaries and safety power supply section MA&SPSS at the other end of the NSSSU.

The unit includes a horizontal generally cylindrical steel containment shell encasing the reactor and the steam generators, with all safety related components, equipment, diesel power supplies, controls and devices incorporated in the unit on the flotation base fore and aft of the shell.

Inclusion of an open-ended radiation and missile shield on a foundation at the use site into which the NSSSU may be installed, enables construction work to proceed simultaneously in the field and at the factory.

The combination of a field-built missile shield and the factory built steel containment shell provides for double, "pump-back", containment.

Location of the foundation above flood level can be made possible by raising the NSSSU by way of a temporary water lock during installation.

Cellular portions of the flotation base are adapted to be filled with concrete for shielding after arrival at the installation site to allow for shallow-draft flotation during inland waterway transport. Some cells may be cement-filled initially for float-leveling trim.

The invention will become more readily apparent from the following description of a preferred embodiment thereof shown, by way of example only, in the accompanying drawings, in which:

Figs. 1 and 2 are plan and elevation views, respectively, showing schematically in outline a nuclear steam supply system unit, NSSSU, constructed in accord with features of the present invention;

Fig. 3 is an end elevation view of the nuclear steam supply system unit of Figs. 1 and 2;

Fig. 4 is a side elevation view, partly in outline and partly in section, showing details of a nuclear steam supply section, NSSS, of the unit of the preceding figures;

Fig. 5 is a lateral cross-sectional view, partly in outline, of the NSSS of the unit of the present invention;

Fig. 6 is a side-elevational view, substantially in outline showing a control and instrumentation section, C and IS, of the unit of the present invention;

Fig. 7 is a side-elevational view substantially in outline showing a fluid systems, auxiliary and safety power supply section of the unit of the present invention;

Figs. 8 and 9 illustrate use site preparation and installation means for the unit of the present invention.

Figs. 10 and 11 are plan and side elevation views showing schematically in outline a submergible barge for open-ocean transportation of the NSSSU of the present invention;

Figs. 12 and 13 are plan and side elevation views of a bolt-on ocean-going alternative flotation transporter for the NSSSU of the present invention;

Fig. 14 is a plan view partially in section showing a parallel array of cave-moored barges respectively supporting the turbine building, auxiliary building, nuclear steam supply system and fuel handling building of a nuclear power generation facility constructed in accordance with the principles of this invention;

Fig. 15 is a side elevational view, partially in section, showing the nuclear steam supply unit of Fig. 14 on its moorings;

Fig. 16 is a elevational view, partially in section of a nuclear steam supply unit barge mounted facility having a compartmented buoyancy skirt; and

Fig. 17 is a bottom plan view of the compartmented skirt of Fig. 16.

The basic concept of the present invention resides in the provision of a nuclear steam supply system unit, NSSSU, mounted on integrally formed flotation base 2 so constructed and arranged as to enable such unit to be tested for safety and performance at the factory where it is constructed and thereafter towed while being floated to a pre-constructed foundation at a selected use site overseas or along the coast of the United States, or along a major navigable river or lake accessible from the coast-line, such as along the Mississippi, Missouri, Ohio, etc. rivers, or along the coast of the Great Lakes in the United States and North America as accessible by way of the St. Lawrence. It is intended that the NSSSU be complete with respect to including all of the operational and safety equipment necessary to function as a source of steam supply. In this regard, the NSSSU includes a fore and aft mid-portion that functions as a nuclear steam supply section 1, NSSS, in affiliation with a control and instrument section C&IS at one end of the NSSSU and a mechanical auxiliaries and safety power supply section MA&SPSS at the other end of the NSSSU.

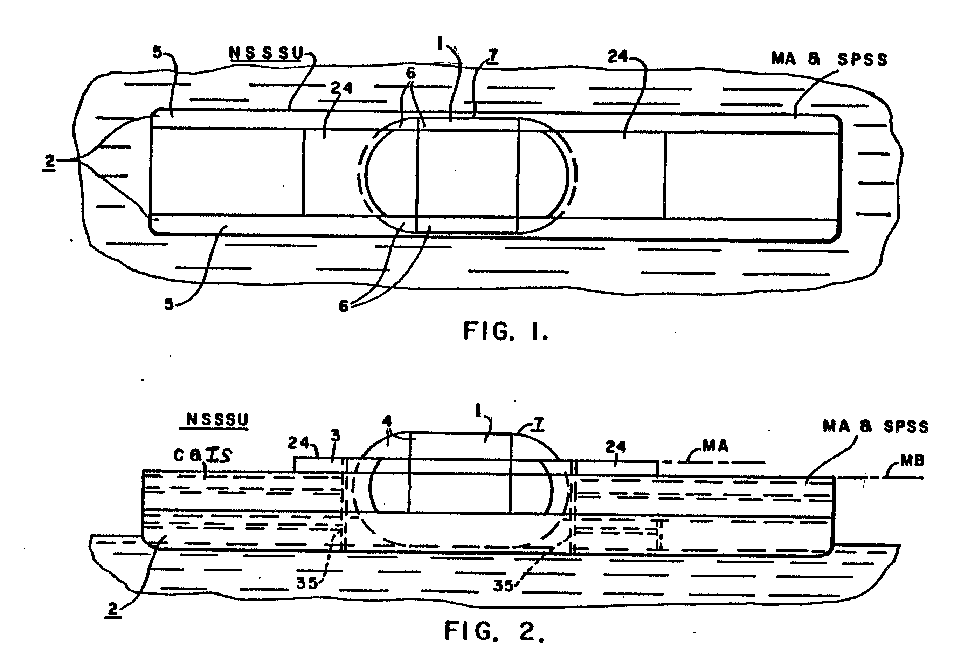

Referring to Figs. 1, 2 and 3, a primary feature of the NSSSU of the present invention revolves around the construction of the unit such that substantially all of the dynamic functional operational parts of the several longitudinal sections C&IS, NSSS, and the MA&SPSS al lie within a widthwise and heightwise region of the unit capable of passing under navigable bridges along the waterway and into and out of locks along the waterway without requiring any substantial significant disassembly of such functional components as factory-installed within the NSSSU. In this regard the overall height of the unit as originally assembled at the factory is adapted to be altered to suit different bridge heights by removal at the factory and reinstallation at the use site, of the several upper structural housing portions of the unit with no or substantially little disturbance to the functional dynamic operational components of the system disposed within the unit. A NSSSU might have a draft of 2.75 m and an overall height of 32 m for towing along the coastal areas of the United States, for example, and through the lower regions of the Mississippi River up to Cairo, Illinois, for example. If it does continue to proceed along the Missouri or the Ohio Rivers the unit can be adapted for passages under lower bridges of these rivers by removal of the upper section 4 of the nuclear steam supply section of the NSSSU, and finally uppermost regions of the Ohio and Missouri Rivers can be traversed by the unit by further removal of still another upper section 3 of the housing portion of the unit. At this point the overall height of the unit may be in the realm of 20 m, for example, with 2.75 m draft.

To accommodate transit through narrower canal or lock regions, such as along the St. Lawrence Seaway to gain access to the Great Lakes in the North American Continent, the longitudinal side regions 5 of the flotation base 2, together with side regions 6 of a steel containment shell 7 of the NSSS can be removed. In this case the width of the unit may be as much as 23 m wide and the overall height can be allowed to be 32 m with the upper sections 3 and 4 intact. In all cases the length of the unit can be about 180 m long and be able to pass through the locks along the aforementioned inland waterways. In the narrower width the flotation base 2 provides less lift and accordingly the water level draft tends to be in the order of 4.5 m rather than the 2.75 m of the wider configuration of the flotation base 2.

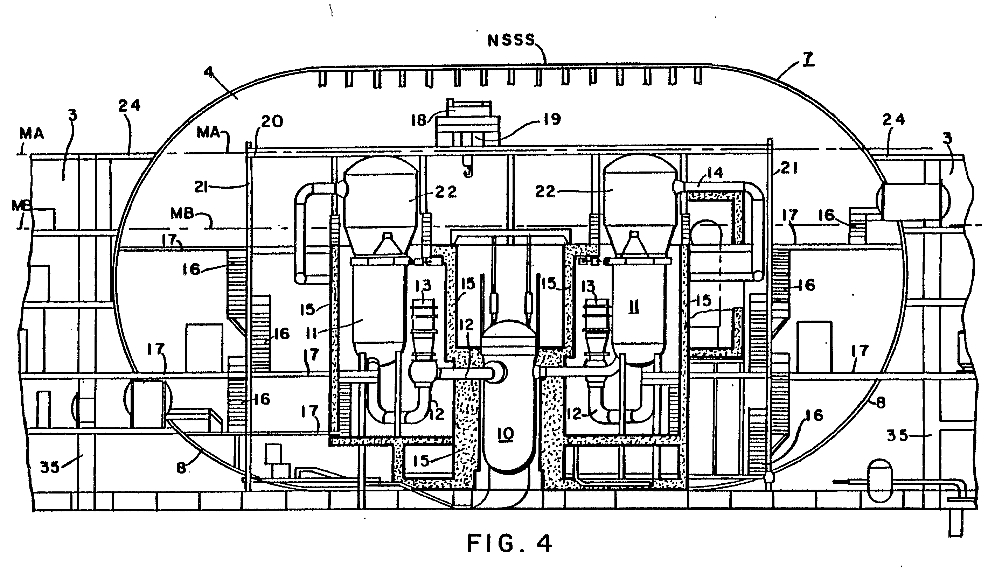

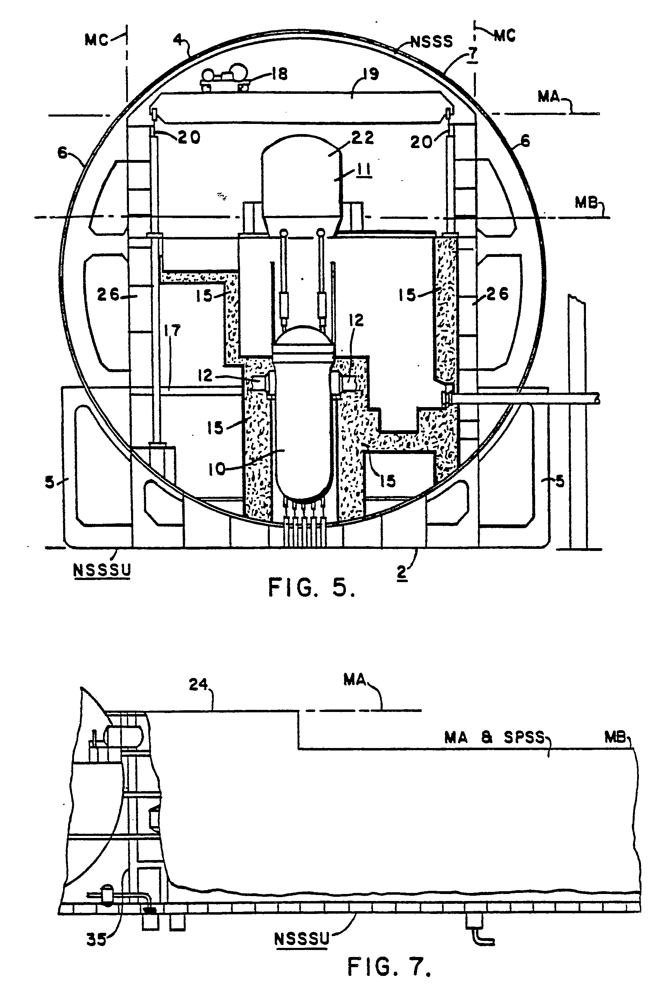

Referring to Figs. 4 and 5, the nuclear steam supply section, NSSS, is integrally mounted on the flotation base 2, which is of hollow steel construction and of flat hull-like configuration having the longitudinal side regions 5 removably attached thereto. The steel containment shell 7 is generally cylindrical with spherical end regions 8. The shell is mounted on the flotation base 2 and attached thereto as by weldments (not shown). Disposed within the shell 7 there is a nuclear reactor vessel 10, a pair of steam generators 11, primary coolant lines 12 for the reactor vessel 10, pumps 13 for circulating the primary coolant through the reactor vessel 10 by way of the lines 12 and into and through the primary side of the steam generators 11. A steam line 14 exits from the secondary side of each of the steam generators 11 for delivery to a steam operated turbine generator assembly (not shown) ultimately to be affiliated with the unit of the present invention. Disposed around the reactor vessel 10 and around the steam generators 11 are a number of hollow steel wall sections 15 that are adapted to be filled with concrete for radiation shielding purposes once the unit is installed at its ultimate use site. A number of stairways 16 vertically interconnect a plurality of horizontal working platforms 17 disposed within the interior of the shell 7 to accommodate working and operating personnel therein. An overhead crane 18 is provided within the shell 7 above the steam generators 11 that is movable along the cross beam 19 that in turn is capable of moving along longitudinal guide rails 20.

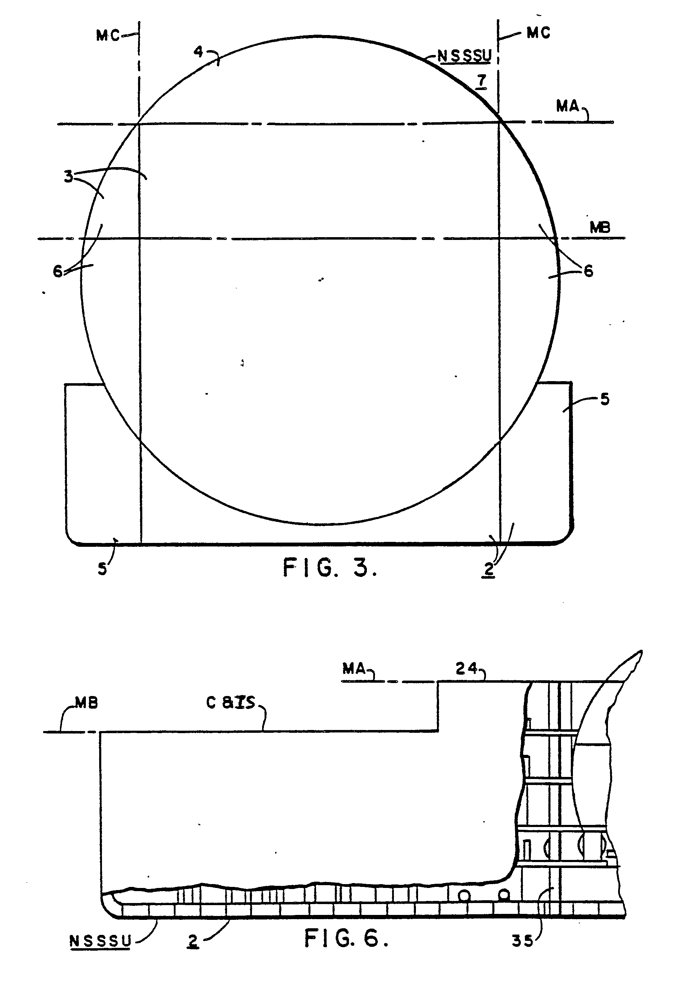

Different height sections are adapted to be removed from the shell 7; the uppermost region having a juncture seam along the horizontal line MA and a second and lower region having a juncture seam along the horizontal line MB, to enable passage of the shell under different height bridges that may exist along the waterways along which the unit is being towed while enroute to a use site. As mentioned hereinbefore, when the uppermost section of the shell 7 is removed, it will be apparent that the crane 18 and cross bridge member 19 also will have to be removed to afford the lowered height for bridge clearance. When the height of the shell is reduced still further to the height designated by the line MB in Figs. 4 and 5, upper ends of vertical support columns 21 for the crane cross member 19 and the tracks 20 etc. also additionally will have to be removed, as will an uppermost section 22 of the steam generator. It also will be apparent from Figs. 1, 2, 6 and 7 that an uppermost floor 24 of the sections C&IS and MA&SPSS of the nuclear steam supply system unit, NSSSU, also will need to be removed together with the portions of the shell 7 where the overall height is to be reduced to the level represented by the dot dash line MB in the several figures. Vertical sidewalls 26 are disposed within the interior of the shell 7, Figs. 3 and 5, which act to provide structural integrity and support for the nuclear steam supply components disposed in the nuclear steam supply section, NSSS, in the widthwise region between the removable side regions 6 when such regions are removed to accommodate passage through the narrower canalways and locks. The unit is adapted to have the longitudinal side edges 5 of the flotation base 2 removed together with the side sections 6 of the steel containment shell 7 along the dot-and-dash lines MC.

By making the flotation base 2 together with its vertical walls 26 and all the partitions 15 hollow, a structural rigidity is afforded which is at the same time of sufficiently light weight to enable the nuclear steam plant components to be transported by flotation and ultimately to be filled with cement to provide further rigidity and radiation shielding. Thus upon installation at the use site, replacement of the previously removed clearance-accommodating components will be reinstalled.

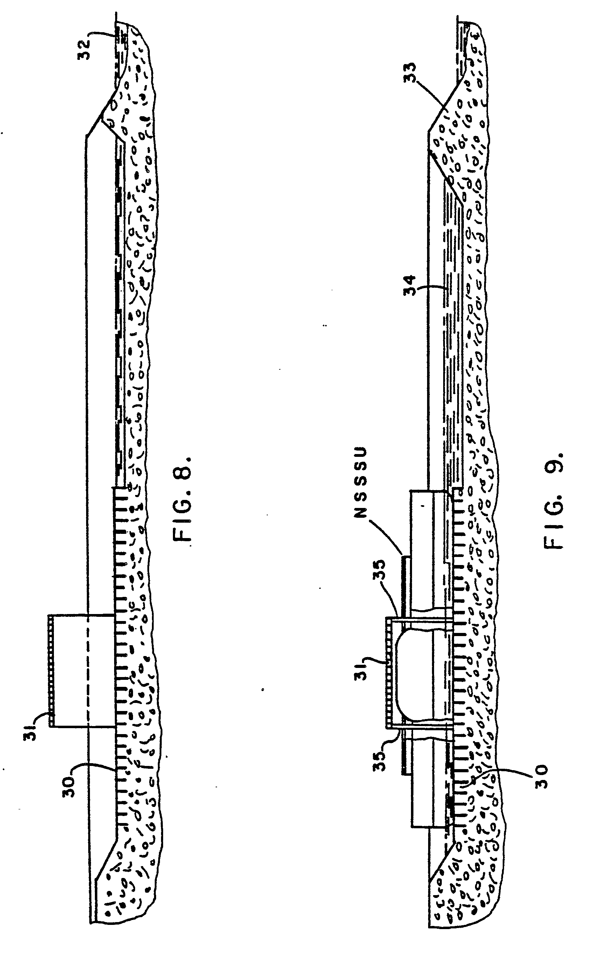

The completed nuclear steam supply system unit NSSSU is towed to its use site location to a pre-constructed foundation, Figs. 8 and 9 on which a hollow radiation shield 31 also will have been constructed. Foundation 30 can be made higher than the water level 32 of the river or coastal body of water along which the use site is located by use of a dike 33. An artificial lake 34 can be constructed to enable the floating of the NSSSU into the shield 31 and onto the foundation 30. The work on preparation of the foundation 30 and the shield 31 together with that of the dike 33 can occur simultaneously with the construction of the nuclear steam supply system unit, NSSSU. Once having been installed at the site, the auxiliary components may be added, including the turbine generator plant (not shown) to be operated by the steam derived from the NSSSU. Such steam turbine generator plant may or may not be prefabricated and of the flotation type, according to the desire and need of the user.

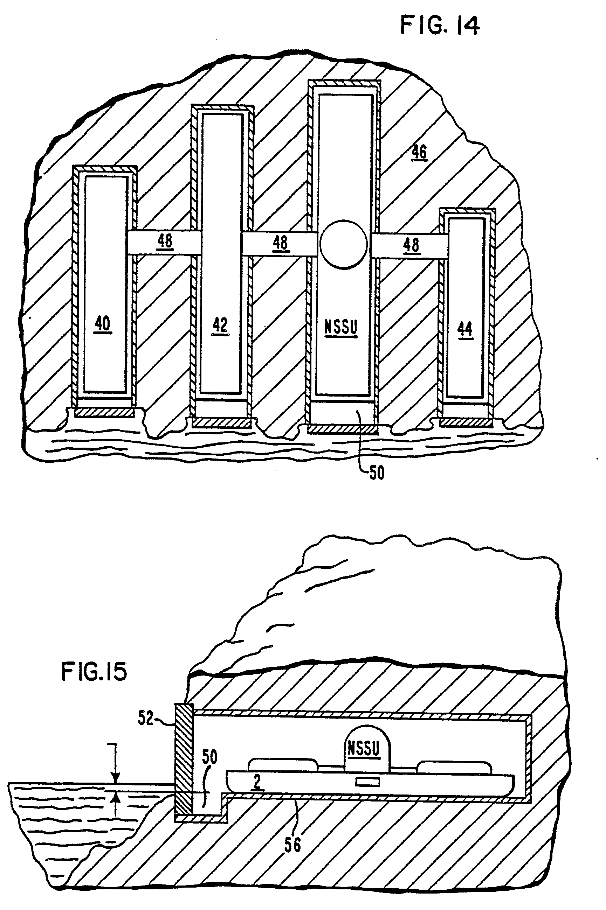

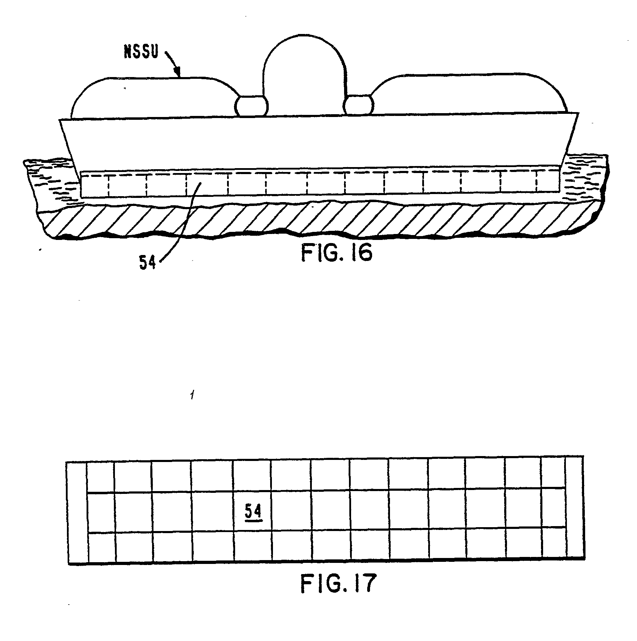

An example of a prefabricated steam turbine generator plant of the flotation type is illustrated in Fig. 14, wherein the complete nuclear facility is illustrated as having its various major components, i.e. the turbine building 40, the auxiliary building 42, the NSSSU and the fuel handling building 44 supported on separate barges. In the example shown, the respective barges are moored in corresponding caves, tunneled in the side of a hill, having interconnecting passages 48 to permit interaction between the various power generating facility components. As with the previous arrangements described, the various plant components may be constructed, in parallel, at factory site facilities which are separate from the plant utilization site. At the same time, tunnels can be cut into river, lake or seacoast mountains or cliffs such that when the tunnels are opened to the adjacent body of water, there is sufficient water level to accommodate the draft of the barge. Smaller interconnecting tunnels 48 between the modules are furnished to permit interaction of the various components. Similar to the installation procedures noted heretofore, the barges may then be floated into place in the tunnels and then the open end of the tunnels can be sealed. The tunnel excavation, preparation and liner, to provide a stable base mat and environment, and prevent rock falls, would be done while the tunnel is dry. Once the barges are floated into position several options are available to secure their moorings. As illustrated in Fig. 15, the barges can be located below the final water level. In such case the tunnel should be constructed with a sump 50 placed at the water end of the tunnel to collect any seepage from the main body of water. It is desirable to maintain the barge floating, for seismic reasons and the water level of the tunnel is raised to position the barge above normal water level. The barge would then be blocked in place at the higher elevation by a tunnel barrier such as 52 shown in Fig. 15. This arrangement has the advantage of precluding concern and/or need for complex provisions to prevent future tunnel floating, for example, during times of high water level. Flooding the tunnel with fresh water to float the barge will reduce corrosion; and maintaining the fresh water level above that of any adjacent seawater will preclude in-leakage that might otherwise contaminate the fresh water buffer. To further reduce the vertical seismic loads, compartmentalized skirts could be fitted to the bottom of the barges as illustrated in Figs. 16 and 17. In one embodiment the skirt compartments would be kept filled with compressed air or nitrogen. The gas, being compressible, would absorb much of the vertical seismic shock. As an alternate, the compartments could be fitted with inflatable bladders. Desirably, the "free" water level, that is the water between the floating barge and its base mat 56 (Fig. 15) would be kept to less than one foot to limit vertical movement in the event of loss of water from the tunnel. This would limit the need for piping flexibility. As with above ground sites, the tunnels can be prepared in parallel with plant unit construction at the factory site, with the added advantages of seclusion and greater security.

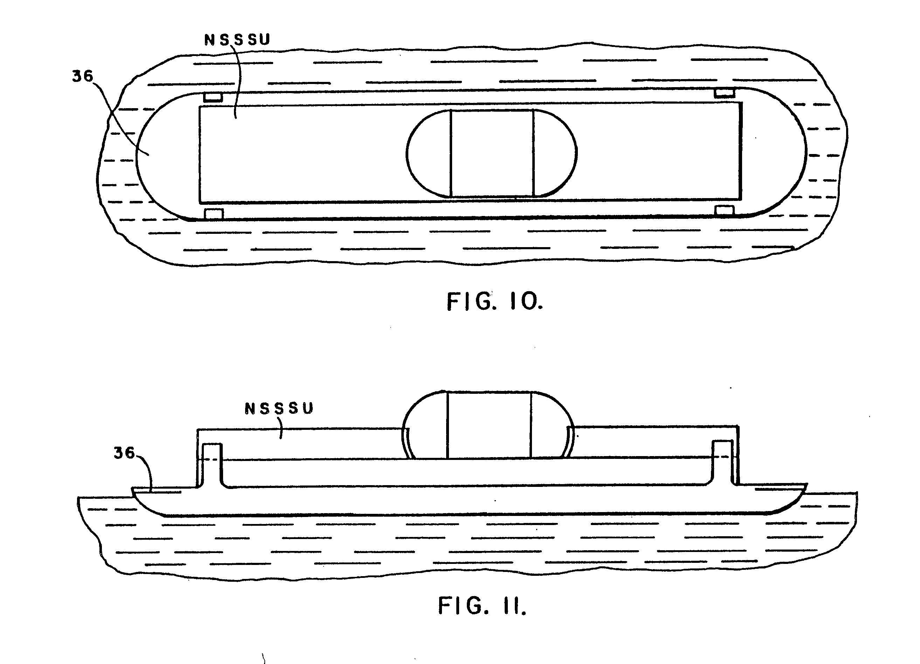

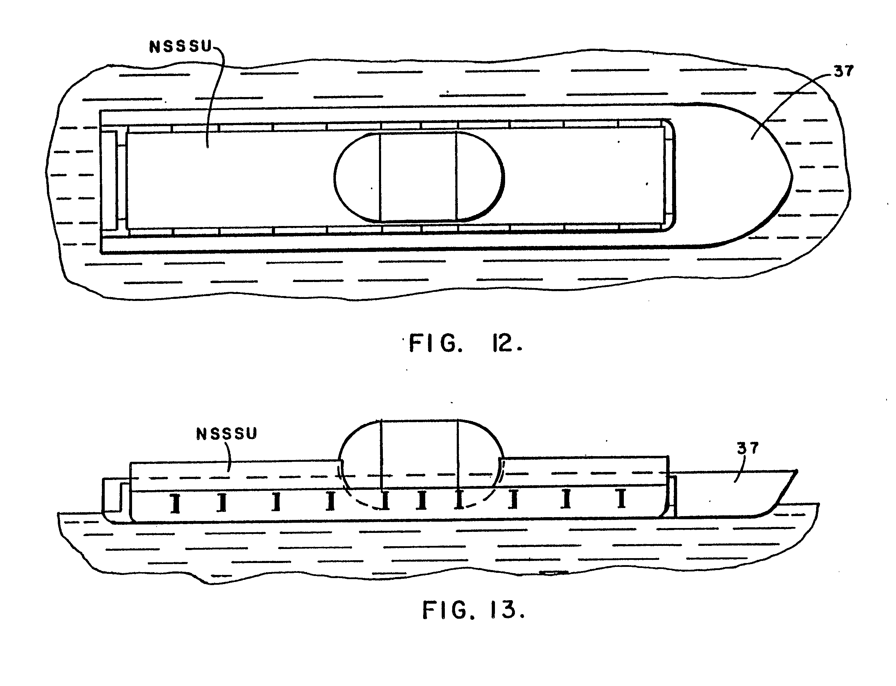

Where transporting the NSSSU over a large distance on the open seas, it may be preferred to employ such as a submergible barge or floating dry dock as exemplified schematically in Figs. 10 and 11 to carry such NSSSU. An alternative construction can be to supplement the bouyancy characteristics of the NSSSU by an auxiliary floating hull 37 in which the NSSSU can be fit and secured, as exemplified schematically in Figs. 12 and 13.

## Claims

1. A nuclear power generating facility consisting of at least a nuclear steam supply system (1) including a nuclear reactor and of an electric turbine-generator system (40), wherein said nuclear reactor is mounted on a floatable body (2) which is made to rest at a use site on a foundation (30), caracterized in that both said nuclear steam supply and electric turbine generator systems (1, 40) are mounted on floatable elongated body units which are made to float at rest at the use site on foundations (56) in parallel separate caves, located below normal water level, said steam supply and turbine generator systems (1, 40) being interconnected at such use site by a passage (48) for interaction between the systems at the use site, and that barriers (52) are provided adapted to seal off said caves so as to block the body in place, and that a shock absorbing support is provided at least for said nuclear steam supply system (1) to reduce seismic loads on said steam supply system (1).

2. A power generating facility as claimed in claim 1 and adapted to be assembled at a manufacturing site so as to be floated along commercially navigable waterways to said use site, said nuclear steam supply system including a nuclear reactor (10) and steam generators (11) and other necessary equipment within a reactor containment (7), characterized in that said equipment (10, 11) is arranged essentially along a line so as to maintain the containment (7) relatively narrow and said containment (7) further has a separate upper section (4) so as to permit reduction of height of said containment (7) for permitting movement of said system beneath bridges, and that all major equipment (10, 11) located within said containment (7) are arranged at a height below said upper section (4).

3. A power generating facility as claimed in claim 2, characterized in that said containment (7) has also separate side sections (6) permitting reduction of the width of said system for movement through narrow locks or waterways, all major components (10, 11) of said system being located in said containment (7) exclusive of said side sections (16).

4. A nuclear steam supply system as claimed in claim 2 or 3, characterized in that said reactor containment (7) is an elongated metal shell with said steam supply system (1) being located in the mid section thereof and a control and instrument section being disposed at one end and auxiliary and safety power supply section being disposed at the opposite end thereof.

5. A method of providing power generating facilities as claimed in any of claims 2 to 4, characterized in that floatable units of such facilities are constructed at a manufacturing site adjacent to a navigable waterway which units are capable of being towed along commercial navigable coastal and inland waterways including through locks thereof with substantially if not all of the dynamic working components (10, 11) of the systems located within the aforesaid unit at a height below such separate uppermost heightwise sections (4), safety inspections of the units are performed at said manufacturing site and the units are floated by towing along navigable waterways to a selected use site where the units are finally placed to float at rest and said separate sections (4) are attached.

6. A method as claimed in claim 5, characterized in that the use site is prepared for acceptance of the units prior to arrival of such units at such site.

7. A method as claimed in claim 5 or 6, characterized in that the separate outermost widthwise sections (6) are removed during transfer to adapt such units for flotation through narrower locks along certain waterways to be traversed enroute to an inland waterway use site.

8. A method as claimed in claims 5, 6 or 7 characterized in that flotation assistance is provided to the unit for open-sea transport to a use site.

## Patentansprüche

1. Kernkraftwerk, bestehend aus mindestens einem nuklearen Dampferzeugersystem (1) mit einem Kernreaktor und aus einem elektrischen. Turbinen-Generator-System (40), wobei der Kernreaktor auf einem schwimmfähigen Körper (2) aufgebaut ist, der an einem Einsatzort auf einem Fundament (30) aufsetzbar ist, dadurch gekennzeichnet, daß sowohl das nukleare Dampferzeugersystem (1) als auch das elektrische Turbinen-Generator-System (40) auf länglichen schwimmfähigen Körpern aufgebaut sind, die am Einsatzort in Auflage auf Fundamente (57) abgesenkt werden, die in parallelen, gesonderten Becken unterhalb des normalen Wasserspiegels gelegen sind, daß weiter das Dampferzeugersystem (1) und das Turbinen-Generator-System (40) an der Einsatzstelle durch einen Kanal (48) zum gegenseitigen Austausch zwischen den beiden Systemen am Einsatzort miteinander verbunden sind, und daß Sperren (52) zum Abschließen der Becken derart vorgesehen sind, daß die Körper in ihrer Lage blockiert werden, und daß mindestens für das nukleare Dampferzeugersystem (1) eine stoßabsorbierende Lagerung vorgesehen ist, um seismische Belastungseinwirkungen auf das Dampferzeugersystem (1) zu verringern.

2. Kraftwerk nach Anspruch 1, das für den Zusammenbau an einem Herstellungsort ausgelegt und über Handelsschiffahrtswege schwimmend an den Einsatzort bringbar ist, wobei das nukleare Dampferzeugersystem einen Kernreaktor (10) und Dampferzeuger (11) sowie weitere notwendige Einrichtungen innerhalb eines Reaktorgebäudes (7) enthält dadurch gekennzeichnet, daß die genannten Einrichtungen (10, 11) im wesentlichen linienförmig angeordnet sind, um das Gebäude (7) verhältnismäßig schmal zu halten, und daß das Gebäude (7) ein gesondertes Oberteil (4) aufweist, so daß eine die Durchfahrt des Systems unter Brücken hindurch erlaubende Verringerung der Höhe des Gebäudes (7) möglich ist, und daß alle innerhalb des Gebäudes (7) befindlichen größeren Einrichtungen (10, 11) in einer Höhenlage unterhalb des genannten Gebäudeoberteils (4) angeordnet sind.

3. Kraftwerk nach Anspruch 2, dadurch gekennzeichnet, daß das Gebäude (7) außerdem gesonderte Seitenteile (6) aufweist, um eine Breitenverringerung des Systems zur Hindurchfahrt durch schmale Schleusen oder Wasserwege zu ermöglichen, und daß alle größeren Einrichtungen (10, 11) des Systems innerhalb des Gebäudes (7) unter Ausschluß der Seitenteile (6) angeordnet sind.

4. Nulkeares Dampferzeugersystem nach Anspruch 2 oder 3, dadurch gekennzeichnet, daß das Reaktorgebäude (7) als längliche Metallkonstruktion ausgebildet ist, in deren Mittelabschnitt das Dampferzeugersystem (1) untergebracht ist und die am einen Ende einen Steuerstab- und Instrumentierungsabschnitt und am anderen Ende einen Hilfsaggregate- und Sicherheitsleistungserzeugerabschnitt aufweist.

5. Verfahren zur Herstellung eines Kraftwerks nach einem der Ansprüche 2 bis 4, dadurch gekennzeichnet, daß die schwimmfähigen Einheiten des Kraftwerks an einem Herstellungsort aufgebaut werden, der an einem schiffbaren Wasserweg liegt, wobei die Einheiten entlang Küsten- und Binnenhandelsschiffahrtswegen einschließlich Schleusen schleppbar sind, während im wesentlichen alle wirksamen Arbeitskomponenten (10, 11) der Systeme innerhalb der jeweiligen Einheit in einer Höhenlage unterhalb gesonderter höhenmäßig oberster Abschnitte (4) angeordnet sind, daß weiter die Sicherheitsprüfungen der Einheiten am Herstellungsort durchgeführt und die Einheiten sodann schwimmend über schiffbare Wasserwege an den jeweiligen Einsatzort geschleppt werden, wo die Einheiten schließlich in eine Ruheposition abgesetzt und die genannten gesonderten Abschnitte (4) befestigt werden.

6. Verfahren nach Anspruch 5, dadurch gekennzeichnet, daß der Einsatzort vor der Ankunft der Einheiten an diesem Ort für die Aufnahme der Einheiten vorbereitet wird.

7. Verfahren nach Anspruch 5 oder 6, dadurch gekennzeichnet, daß die gesonderten, breitenmäßig äußersten Abschnitte (6) während des Transports abgenommen werden, um die Einheiten durch schmalere Schleusen entlang gewisser Wasserwege auf dem Weg zu einem an einem Binnenwasserweg gelegenen Einsatzort schwimmend transportieren zu können.

8. Verfahren nach Anspruch 5, 6 oder 7, dadurch gekennzeichnet, daß für den Transport der jeweiligen Einheit zum Einsatzort über die offene See eine Schwimmhilfe vorgesehen wird.

## Revendications

1. Usine de production d'énergie nucléaire composée d'au moins un système d'alimentation en vapeur nucléaire (1) comportant un réacteur nucléaire, et d'un système turbine-générateur électrique (40), dans lequel ledit réacteur nucléaire est monté sur un bâti flottable (2) qui est conçu pour reposer dans un site d'utilisation sur des fondations (30), caractérisée en ce que lesdits systèmes d'alimentation en vapeur nucléaire et de turbine-générateur électrique (1, 40) sont tous deux montés sur des unités de bâti flottables allongées qui sont faites pour flotter au repos dans le site d'utilisation sur des fondations (56) dans des excavations séparées paralléles, situées sous le niveau normal de l'eau, lesdits systémes d'alimentation en vapeur et de turbine-générateur (1, 40) étant interconnectés sur ce site d'utilisation par un passage (48) pour une interaction entre les systèmes sur le site d'utilisation, et en ce que des barrages (52) adaptés pour fermer hermétiquement lesdites excavations de façon à maintenir le bâti en place sont disposés, et en ce qu'un support d'amortissement des chocs est fourni au moins pour ledit système d'alimentation en vapeur nucléaire (1) pour réduire les charges sismiques sur ledit système d'alimentation en vapeur (1).

2. Usine de production d'énergie selon la revendication 1 adaptée pour être assemblée sur un site fabrication de façon à être flottée le long de voies d'eau navigables commercialement jusqu'audit site d'utilisation, ledit système d'alimentation en vapeur nucléaire comportant un réacteur nucléaire (10) et des générateurs de vapeur (11) et d'autres équipements nécessaires à l'intérieur d'un confinement de réacteur (7), caractérisée en ce que ledit équipement (10, 11) est disposé essentiellement le long d'une ligne de façon à garder le confinement (7) relativement étroit, et en ce que ledit confinement (7) possède de plus une partie supérieure séparée (4) de façon à permettre une réduction de la hauteur dudit confinement (7) pour permettre le déplacement dudit systéme sous des ponts, et en ce que tous les équipements principaux (10, 11) situés à l'intérieur dudit confinement (7) sont disposés à une hauteur inférieure à celle de ladite partie supérieure (4).

3. Usine de production d'énergie selon la revendication 2, caractérisée en ce que ledit confinement (7) possède aussi des latérales séparées (6) permettant une réduction de la largeur dudit système pour le passage par des écluses ou des voies d'eau étroites, tous les composants principaux (10, 11) dudit système étant situés dans ledit confinement (7), sauf dans lesdites parties latérales (6).

4. Système d'alimentation en vapeur nucléaire selon la revendication 2 ou 3, caractérisé en ce que ledit confinement de réacteur (7) est une enveloppe de métal allongée, ledit système d'alimentation en vapeur (1) étant situé dans la partie médiane de celli-ci et une partie de commande et d'instruments étant disposée à une extrémité, et une partie de fourniture d'énergie de secours et d'auxiliaires étant disposée à l'extrémité opposée de celle-ci.

5. Procédé pour la fourniture d'usines de production d'énergie selon l'une quelconque des revendications 2 à 4, caractérisé en ce que des unités flottables de ces usines sont construites sur un site de fabrication adjacent à une voie d'eau navigable, lesquelles unités sont susceptibles d'être remorquées le long de voies d'eau navigables côtières et intérieures commerciales, y compris les écluses de celles-ci, avec la plupart, sinon la totalité des composants dynamiques actifs (10, 11) des systèmes située à l'interieur de l'unité précédemment citée à une hauteur inférieure à celle de ces parties séparées situées au-dessus (4), les inspections de conformité des unités sont effectuées sur ledit site de fabrication et les unités sont flottées par remorquage le long de voies d'eau navigables jusqu'à un site d'utilisation choisi, où les unités sont finalement mises à flotter au repos et où lesdites parties séparées (4) sont fixées.

6. Procédé selon la revendication 5, caractérisé en ce que le site d'utilisation est préparé pour la réception des unités avant l'arrivée de ces unités sur ce site.

7. Procédé selon la revendication 5 ou 6, caractérisé en ce que les parties séparées les plus en dehors dans la largeur (6) sont retirées durant le transfert pour adapter ces unités au flottage à travers les écluses les plus étroites le long de certaines voies d'eau devant être traversées sur le chemin vers un site d'utilisation sur une voie d'eau intérieure.

8. Procédé selon la revendication 5, 6 ou 7 caractérisé en ce que l'on procure à l'unité une assistance de flottaison pour le transport en pleine mer jusqu'à un site d'utilisation.

FIG. I.

FIG. 2.

0 061 675

MC — | MC —

4 — | NSSSU

7

— MA —

3 —

— MB —

6 — | — 6

5 —

5 | FIG. 3. | 2

— MA — | 24 —

— MB — | c a 1 s —

NSSSU | 2 — | FIG. 6. | 35 —

FIG. 4

0 061 675

FIG. 5.

FIG. 7.

FIG. 8.

FIG. 9.

NSSSU

36

FIG. 10.

NSSSU

36

FIG. 11.

FIG. 12.

FIG. 13.

0 061 675

FIG. 14

FIG.15

NSSU

FIG. 16

54

*1*

<u>54</u>

FIG. 17